(19) Europäisches Patentamt
European Patent Office
Office européen des brevets

(11) **EP 4 068 674 B1**

(12) **EUROPÄISCHE PATENTSCHRIFT**

(45) Veröffentlichungstag und Bekanntmachung des Hinweises auf die Patenterteilung:
**27.05.2026   Patentblatt 2026/22**

(21) Anmeldenummer: **22164639.1**

(22) Anmeldetag: **28.03.2022**

(51) Internationale Patentklassifikation (IPC):
*H04L 7/04* (2006.01)   *H04B 1/16* (2006.01)
*H04L 27/00* (2006.01)   *H04W 52/00* (2009.01)

(52) Gemeinsame Patentklassifikation (CPC):
**H04L 7/042**

(54) **STROMSPARENDER SAMPLING-EMPFÄNGER MIT NICHTKOHÄRENTER ABTASTUNG MIT EINEM SAMPLE PRO BIT**

POWER-SAVING SAMPLING RECEIVER WITH NON-COHERENT SAMPLING WITH ONE SAMPLE PER BIT

RÉCEPTEUR D'ÉCHANTILLONNAGE À FAIBLE CONSOMMATION DE COURANT DOTÉ À SÉLECTION NON COHÉRENTE DE L'ÉCHANTILLON D'UN ÉCHANTILLON PAR BIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **29.03.2021   DE 102021203147**

(43) Veröffentlichungstag der Anmeldung:
**05.10.2022   Patentblatt 2022/40**

(73) Patentinhaber: **Fraunhofer-Gesellschaft zur Förderung
der angewandten Forschung e.V.
80686 München (DE)**

(72) Erfinder:
• **OEHLER, Frank
91058 Erlangen (DE)**
• **MILOSIU, Heinrich
91058 Erlangen (DE)**
• **WEBER, Norbert
91058 Erlangen (DE)**
• **GEYER, Michael
91058 Erlangen (DE)**
• **FRÜHSORGER, Dieter
91058 Nürnberg (DE)**
• **POPKEN, Gralf
91058 Erlangen (DE)**
• **THÖNES, Thomas
91058 Erlangen (DE)**

(74) Vertreter: **Schlenker, Julian
Schoppe, Zimmermann, Stöckeler
Zinkler, Schenk & Partner mbB
Patentanwälte
Radlkoferstraße 2
81373 München (DE)**

(56) Entgegenhaltungen:
EP-A2- 1 322 061         WO-A1-00/41355
US-A1- 2007 211 835

**Beschreibung**

Ausführungsbeispiele der vorliegenden Erfindung beziehen sich auf einen Datenempfänger, und im speziellen, auf einen stromsparenden Sampling-Empfänger mit nichtkohärenter Abtastung mit einem Sample pro Bit.

Es sind stromsparende Empfänger bekannt, die häufig als Detektor-Empfänger oder Superregenerativ-Empfänger ausgeführt sind. Der Stromverbrauch beträgt einige 100 μA.

In [1] wird ein Diodendetektor mit vorgeschaltetem LNA (LNA = low noise amplifier, dt. rauscharmer Verstärker) vorgestellt. Der Stromverbrauch beträgt 100 μA.

In [2] wird ein Superregenerativ-Empfänger mit einem relativ hohen Stromverbrauch von 570 μA beschrieben.

In [3] wird ein abtastender PLL-basierter Empfänger ("dutycycled PLL") vorgestellt, der synchron zum Sender läuft. Der Stromverbrauch ist mit 346 μA ebenfalls relativ hoch.

In [4] wird ein abtastender Empfänger mit konstanter Abtastrate und konstanter An-Zeit (engl. on time) beschreiben. Der Empfänger besteht aus einem Analogteil und einem Digitalteil. Es wird eine Radiofrequenz-Abtastung (engl. RF sampling) durchgeführt, indem der komplette Empfänger ein- bzw. ausgeschaltet wird. Der Analogteil und der Digitalteil werden hierbei stets in den "An-Phasen" eingeschaltet und in den "Aus-Phasen" ausgeschaltet.

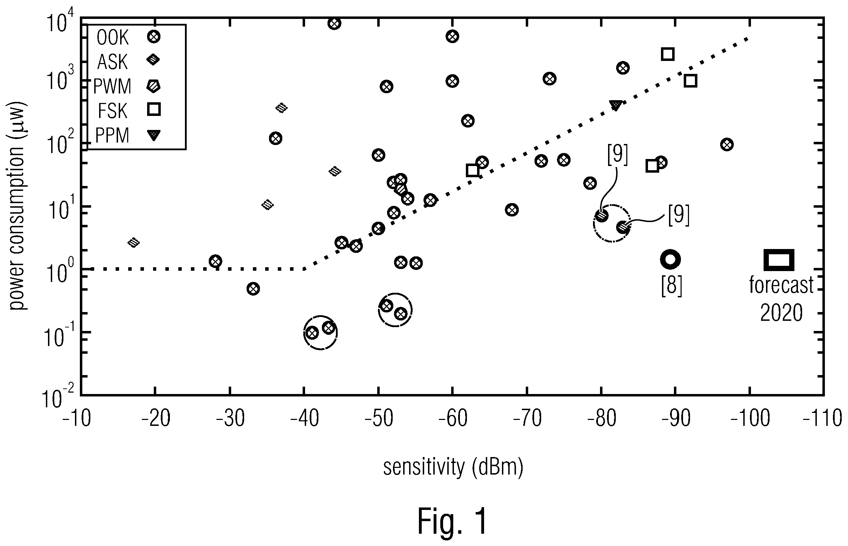

Fig. 1 zeigt in einem Diagramm Leistungsaufnahmen in μW vs. Empfindlichkeiten in dBm herkömmlicher Ultra-Low-Power-Empfänger für den UHF-Frequenzbereich für unterschiedliche Modulationsverfahren (OOK (OOK = on-off keying, dt. eine binäre Modulationsart), ASK (ASK = amplitude shift keying, dt. Amplitudenumtastung), PWM (PWM = Pulsweitenmodulation), FSK (FSK = frequency shift keying, dt. Frequenzumtastung), PPM (PPM = Puls-Pausen-Modulation)). Mit anderen Worten, Fig. 1 zeigt in einem Diagramm einen Überblick über veröffentlichte Ultra-Low-Power-Empfänger im Leistung-vs-Empfindlichkeit-Diagramm.

Das in Fig. 1 gezeigte Diagramm ist [5] entlehnt und leicht modifiziert, um die Wake-Up-Receiver-Beiträge aus [8] und [9]. Die Einsparung durch direkte Abtastung ("OVS 1") statt einer Überabtastung mit einem Faktor von entspricht knapp einem dekadischen Skalenteil (vertikale Achse).

In [6] wird ein 95-μW-Empfänger für das 2,4-GHz-Band vorgestellt, der eine Empfindlichkeit von -72 dBm aufweist. Die Datenrate beträgt 62,5 kbps. Das 14 nm CMOS-Design digitalisiert das interne Signal mit einem 6-Bit-ADC. Die externe Zeitbasis ist ein 32-kHz-Oszillator. 95 μW sind für jahrelangen Batteriebetrieb zu hoch.

In [7] wird ein Superhet-Empfänger mit 41 μW Leistungsaufnahme beschrieben, der -78 dBm Empfindlichkeit erreicht. Die Erkennung der Aufweckfolge sowie der Empfänger-Adresse erfolgt extern mit einem LF-WakeUp-Emfänger und nicht intern, wie bei [5]. Mit 41 μW ist der Batteriebetrieb mit einer Knopfzelle (z.B. AG 13, 130 mAh) nur fünf Monate möglich.

In [10], US 2007/211835 A1, wird eine Vorrichtung zur Erkennung eines Synchronisationszeitpunkts beschrieben.

Die Vorrichtung umfasst einen Korrelationsrechner, der so konfiguriert ist, dass er einen ersten Korrelationswert erzeugt, indem er eine Kreuzkorrelation zwischen einem abgetasteten Eingangssignal und einem Referenzsignal oder einer Autokorrelation des abgetasteten Eingangssignals berechnet. Ferner umfasst die Vorrichtung einen Interpolationsprozessor, der so konfiguriert ist, dass er einen generiert einen zweiten Korrelationswert, der mehrere der ersten Korrelationswerte mit einer unterschiedlichen Kombination von Abtastpunkten des Eingangssignals interpoliert. Ferner umfasst die Vorrichtung einen Detektor zum Erkennen eines Synchronisationszeitpunkts basierend auf dem ersten und dem zweiten Korrelationswert.

Der vorliegenden Erfindung liegt daher die Aufgabe zugrunde, ein Konzept für einen Empfänger zu schaffen, welches es ermöglicht den Stromverbrauch bzw. die Leistungsaufnahme des Empfängers weiter zu reduzieren.

Diese Aufgabe wird durch den unabhängigen Patentanspruch 1 gelöst.

Vorteilhafte Weiterbildungen finden sich in den abhängigen Patenansprüchen.

Ausführungsbeispiele schaffen einen Datenempfänger, wobei der Datenempfänger konfiguriert ist, um ein Signal, das eine Folge von N Bits aufweist, zu empfangen, um ein Empfangssignal zu erhalten, wobei N eine natürliche Zahl größer gleich acht ist, $N \geq 8$, wobei der Datenempfänger konfiguriert ist, um das Empfangssignal mit einer Abtastrate, die mit einer absichtlichen Abweichung von bis zu 2/N [z.B. bis zu 5% [wie z.B. 3% bis 5%]] einem Abtastwert pro Bit der Folge von N Bits entspricht, abzutasten, um eine Folge von empfangenen Bits zu erhalten, wobei der Datenempfänger konfiguriert ist, um die Folge von empfangenen Bits mit K unterschiedlichen Folgen von N-1 Referenzbits zu korrelieren, um K Teilkorrelationsergebnisse zu erhalten, wobei K kleiner gleich N-1 und größer gleich drei ist, $N-1 \geq K \geq 3$, wobei die K unterschiedlichen Folgen von Referenzbits unterschiedlich punktierte Versionen der gleichen Grundfolge von N Referenzbits sind, wobei der Datenempfänger konfiguriert ist, um die Folge von N Bits zu detektieren, wenn zumindest eines der K Teilkorrelationsergebnisse eine Detektionsschwelle überschreitet.

Ausführungsbeispiele schaffen somit einen abtastenden Funkempfänger, der ohne Synchronisation Daten (z.B. Korrelationsfolgen) empfangen kann. Dabei erfolgt die Abtastung nichtkohärent mit einem Abtastwert pro Bit. Es kann auf eine Überabtastung (z.B. mit dem Faktor 4, 8 oder 16) im Funkempfänger verzichtet werden. Die Stromaufnahme wird dabei entsprechend um den Faktor 4, 8 oder 16 reduziert. Ausführungsbeispiele basieren auf einer Parallelverarbeitung der Korrelationsfolgen mit Punktierungen an verschiedenen Bitpositionen. Ausführungsbeispiele kommen ohne Zeitverzögerung aus, d.h. es wird keine verzögernde Regelung verwendet. Der Datenempfang erfolgt somit lückenlos. Der Wegfall der Überabtastung verringert die Empfängerstromaufnahme erheblich, der Wegfall einer Synchronisationsnachricht verkürzt die Übertragungszeit bei Sender und Empfänger

Durch die bei Ausführungsbeispielen verwendete Methode der einfachen Abtastung ist es möglich, Abtastfunkempfänger zu implementieren, die fast eine Größenordnung weniger Leistung verbrauchen.

Ausführungsbeispiele der vorliegenden Erfindung werden bezugnehmend auf die beiliegenden Figuren näher beschrieben. Es zeigen:

Fig. 1 in einem Diagramm Leistungsaufnahmen in $\mu$W vs. Empfindlichkeiten in dBm herkömmlicher Ultra-Low-Power-Empfänger für den UHF-Frequenzbereich für unterschiedliche Modulationsverfahren (OOK, ASK, PWM, FSK, PPM),

Fig. 2 eine schematische Ansicht einer beispielhaften vierfachen Überabtastung von OOK-modulierten Pulsen,

Fig. 3 ein schematisches Blockschaltbild eines Datenempfängers (Funkempfängers), gemäß einem Ausführungsbeispiel der vorliegenden Erfindung,

Fig. 4 zeigt in einer tabellarischen Übersicht am Beispiel von binären Bitfolgen zur OOK-Modulation eines HF-Trägersignals, wie viele Bitfehler im schlimmsten Fall bei einer Binär-Korrelation zulässig sind, wenn entsprechend der Sequenzlänge N die beste Korrelationsfolge auswählt wird,

Fig. 5 eine schematische Ansicht einer gesendeten Folge von Bits mit einer Sende-Datenrate $DR_{TX}$ und einer empfangenen Folge von Bits, die durch Abtasten der gesendeten Folge von Bits mit der Abtastrate (Empfänger-Datenrate) $DR_{RX}$, die kleiner ist als die Sende-Datenrate $DR_{TX}$, resultiert,

Fig. 6 eine schematische Ansicht einer gesendeten Folge von Bits mit einer Sende-Datenrate $DR_{TX}$ und einer empfangenen Folge von Bits, die durch Abtasten der gesendeten Folge von Bits mit der Abtastrate (Empfänger-Datenrate) $DR_{RX}$, die größer ist als die Sende-Datenrate $DR_{TX}$, resultiert,

Fig. 7 eine schematische Ansicht einer gesendeten Folge von Bits mit einer Sende-Datenrate $DR_{TX}$ und einer empfangenen Folge von Bits, die durch Abtasten der gesendeten Folge von Bits mit der Abtastrate (Empfänger-Datenrate) $DR_{RX}$, die gleich der Sende-Datenrate $DR_{TX}$ ist, resultiert,

Fig. 8 eine schematische Ansicht einer gesendeten Folge von Bits mit einer Sende-Datenrate $DR_{TX}$ und einer empfangenen Folge von Bits, die durch Abtasten der gesendeten Folge von Bits mit der Abtastrate (Empfänger-Datenrate) $DR_{RX}$, die gleich der Sende-Datenrate $DR_{TX}$ ist, resultiert, wenn die Abtastzeitpunkte mit den Bitflanken zusammen fallen,

Fig. 9 ein schematisches Blockschaltbild einer Korrelationsstufe des Datenempfängers, gemäß einem Ausführungsbeispiel der vorliegenden Erfindung, und

Fig. 10 in einer Tabelle eine Bitfehlerstatistik für 30 verschiedene Fälle der Stauchung des Bitstroms.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

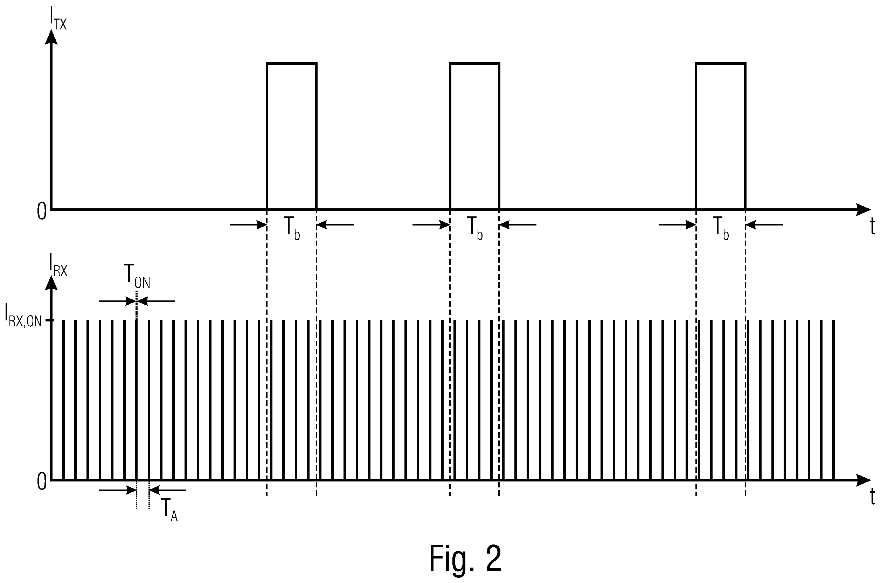

Abtastende Funkempfänger (engl. sampling receiver) nehmen (meist) zyklisch eine Signalprobe von der angeschlossenen Antenne. Der analoge Empfänger ist während eines Abtastvorgangs für die Dauer $T_{ON}$ eingeschaltet. Die Abtastrate kann direkt oder durch Frequenzteilung aus einem digitalen Taktsignal abgeleitet werden. Die Stromaufnahme des abtastenden Funkempfängers ist direkt proportional zur Abtastrate. Der abtastende Funkempfänger ist mit den von einem oder mehreren Funksendern ausgesendeten Funktelegramm nicht synchronisiert. Damit kann zusätzlicher Aufwand beim Sender (z.B. Sync-Telegramme) entfallen als auch beim Empfänger. Dies erspart auch Zeit innerhalb der Funkaussendung und belegt den Funkkanal weniger, was eine höhere Zahl an Funkteilnehmern ermöglicht. Als Schaltung zur genauen Einstellung der Phase für den jeweiligen Abtastzeitpunkt kann beispielsweise eine sog. CDR-Schaltung (CDR = clock and data recovery, dt. Takt- und Datenwiederherstellung) zum Einsatz kommen. Die Stromaufnahme solcher Schaltungen liegt oft deutlich über 1 mA, was im völligen Gegensatz zum Ziel "stromsparender Funkempfänger mit weniger als 10 $\mu$A" steht. Werden Verfahren mit Überabtastung angewandt, werden mehr Samples pro Bit erhalten. Die Stromaufnahme erhöht sich mit dem Faktor der Überabtastung. In Fig. 2 wird beispielsweise eine vierfache Überabtastung angenommen. Ist das RF-Trägersignal OOK-moduliert, entspricht der Sendestrom ITX den gesendeten Bitdaten der Breite Tb. Hier ergeben jeweils vier zusammenhängende Samples das direkte Abbild des jeweiligen Bits. Dem Empfänger fehlt jedoch die zeitliche Zuordnung der einzelnen Abtastwerte. Diese kann beispielsweise durch einen Integrator (z.B. mit einer Gedächtnislänge von vier) ermittelt werden. Es kann jedoch auch vorkommen, dass einzelne Abtastwerte an den OOK-Signalflanken - d.h. an den 0-1- oder 1-0-Übergängen - gebildet werden und unsicher sein können. In diesem Fall können statt vier nun fünf oder drei Abtastwerte dem jeweiligen Bit entsprechen. Diese Unsicherheit bei der ermittelten Bitlänge wirkt sich insbesondere bei niedrigen Überabtastungen (z.B. zwei bis vier) u. U. störend aus und kann zu Fehlentscheidungen bei der Rekonstruktion der gesendeten Bits führen (Datenfehler). Tendenziell ist eine höhere Überabtastung (z.B. von acht) weniger kritisch, weist jedoch eine viel größere mittlere Stromaufnahme auf. Die Unsicherheit an den Bitflanken setzt sich aus mehreren Beiträgen zusammen: Dem Sender-Phasenrauschen, die Art der Senderhüllkurve bei der OOK-Modulation mit 100% Modulationsgrad sowie dem Empfänger-Phasenrauschen u.v.m.

Die im Folgenden beschriebenen Ausführungsbeispiele ermöglichen es den Empfänger ohne Überabtastung, d.h. mit nur 1 Sample pro Bit zu betreiben, um die mittlere Stromaufnahme des Funkempfängers deutlich zu reduzieren.

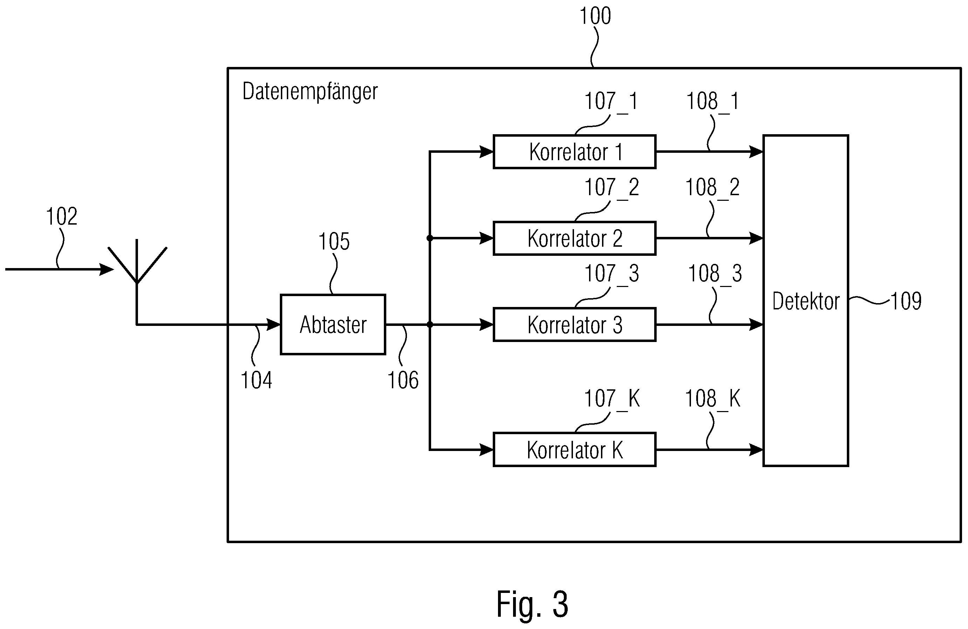

Fig. 3 zeigt ein schematisches Blockschaltbild eines Datenempfängers 100 (Funkempfängers), gemäß einem Ausführungsbeispiel der vorliegenden Erfindung. Der Datenempfänger 100 ist konfiguriert ist, um ein Signal 102, das eine Folge von N Bits aufweist, zu empfangen, um ein Empfangssignal 104 zu erhalten, wobei N eine natürliche Zahl größer gleich acht ist, $N \geq 8$. Ferner ist der Datenempfänger 100 konfiguriert ist, um das Empfangssignal 104 mit einer Abtastrate $DR_{RX}$, die mit einer absichtlichen Abweichung von bis zu 2/N, z.B. bis zu 5% (z.B. 3% bis 5%), einem Abtastwert pro Bit der Folge von N Bits entspricht (d.h. Abtastrate bzw. Empfänger-Datenrate $DR_{RX}$ ungleich Sende-Datenraterate $DR_{TX}$), abzutasten, um eine Folge 106 von empfangenen Bits zu erhalten. Des Weiteren ist der Datenempfänger 100 konfiguriert, um die Folge 106 von empfangenen Bits mit K unterschiedlichen Folgen von N-1 Referenzbits zu korrelieren, um K Teilkorrelationsergebnisse 108_1-108_K zu erhalten, wobei K kleiner gleich N-1 und größer gleich drei ist, $N-1 \geq K \geq 3$, wobei die K unterschiedlichen Folgen von Referenzbits unterschiedlich punktierte Versionen der gleichen Grundfolge von N Referenzbits sind. Der Datenempfänger 100 ist ferner konfiguriert, um die Folge 106 von N Bits zu detektieren, wenn zumindest eines der K Teilkorrelationsergebnisse 108_1-108_K eine Detektionsschwelle überschreitet.

Wie in Fig. 3 gem. einem Ausführungsbeispiel gezeigt ist, kann der Datenempfänger 100 einen Abtaster 105, K Korrelatoren 107_1-107_K und einen Detektor 109 aufweisen.

Der Abtaster 105 kann konfiguriert sein, um das Empfangssignal 104 mit einer Abtastrate, die mit einer absichtlichen Abweichung von bis zu 2/N, z.B. bis zu 5% (z.B. 3% bis 5%), einem Abtastwert pro Bit der Folge von N Bits entspricht, abzutasten, um die Folge 106 von empfangenen Bits zu erhalten.

Die K Korrelatoren 107_1-107_K können konfiguriert sein, um die Folge 106 von empfangenen Bits mit K unterschiedlichen Folgen von N-1 Referenzbits zu korrelieren, um die K Teilkorrelationsergebnisse 108_1-108_K zu erhalten. Hierbei kann ein k-ter Korrelator der Korrelatoren 107_1-107_K konfiguriert sein, um die Folge 106 von empfangenen Bits mit einer k-ten Folge von N-1 Referenzbits zu korrelieren, um ein k-tes Teilkorrelationsergebnis der K Teilkorrelationsergebnisse 108_1-108_K zu erhalten, wobei k eine Laufvariable (natürliche Zahl) von 1 bis K ist.

Der Detektor 109 kann konfiguriert sein, um die Folge 106 von N Bits zu detektieren, wenn zumindest eines der K Teilkorrelationsergebnisse 108_1-108_K eine Detektionsschwelle überschreitet.

Bei Ausführungsbeispielen kann die Folge 106 von empfangenen Bits eine Länge von N-1 Bits aufweisen.

Bei Ausführungsbeispielen kann die Anzahl K an unterschiedlichen Folgen von N-1 Referenzbits wie folgt von einer Anzahl F an tolerierbaren Fehlern abhängig sein:

$$K = \lceil N/F \rceil$$

wobei F eine natürliche Zahl größer gleich eins und kleiner gleich N/3 ist, $N/3 \geq F \geq 1$.

Bei Ausführungsbeispielen kann die gesendete Bitfolge N Bits aufweisen. Zur Detektion können bei Ausführungsbeispielen N-1 punktierte Korrelatoren der Länge N-1 aufgebaut werden (volle Abdeckung beim Phänomen, dass 1 Bit auf der Empfangsseite fehlt). Bei Ausführungsbeispielen können aber auch weniger als N-1 punktierte Korrelatoren der Länge N-1 aufgebaut werden, mindestens jedoch drei Korrelatoren der Länge N-1, wenn die Erkennung der Korrelationsfolge fehlertolerant erfolgt.

Bei Ausführungsbeispielen wird, wie bereits erwähnt, N mit mindestens 8 angenommen.

Bei Ausführungsbeispielen kann ferner eine N-Bit-Sequenz mit der Toleranz zu max. F beliebig verteilten Bitfehlern angenommen werden.

Beispielsweise kann bei einer Sequenz von N = 31 und bei max. F = 6 tolerierbaren Fehlern die Sequenzlänge N = 31 durch F = 6 geteilt werden, so dass in diesem Fall K = 5 Teilkorrelatoren genügen. Im Allgemeinen ist die Mindestanzahl K an Teilkorrelatoren gleich N geteilt durch F, grundsätzlich jedoch mindestens drei.

Die beispielhafte 31-Bit-Folge kann an der vierten (6 : 2 + 1, also F : 2 + 1) Stelle das erste Mal punktiert werden, so dass der erste Teilkorrelator eine Länge von N - 1 = 30 Bit aufweist. F = 6 Bits weiter erfolgt die nächste Punktierung des 31-Bit-Codes, usw. Die Punktionen finden also statt an den Originalstellen der 31-Bit-Folge: 4, 10, 16, 22, 28. Im Allgemeinen: F : 2 + 1, F : 2 + F + 1, F : 2 + 2 F + 1, F : 2 + 3 F + 1, F : 2 + 4 F + 1, ... , N - F : 2.

Innerhalb der fünf Korrelatoren kann nun der Stauchungsfehler durch Abtastratenmismatch (z.B. 3%..5%; 3% = 100% / N) irgendwo anfallen. Erfolgt die Stauchung an Stelle 1, 2, 3 oder 4, sind die gemachten Bitfehler im allg. (!) max. 3 Fehler, günstigenfalls 0 Fehler. Nach der Punktierung passen die Bits (RX-Folge und TX-Folge) wieder zusammen. Liegt die Stauchungsstelle an Position 5, 6, oder 7, ist auch hier der erste Korrelator am günstigsten. Es fallen im Allg. max. 3 Bitfehler an. Erfolgt die Stauchung an Stelle 8, 9 oder 10, 11, 12 oder 13, ist der dritte Korrelator am günstigsten. Der Vergleich der Korrelationswert mit einer $\geq$-Schwelle in jedem Korrelator ergibt ein binäres Signal. Alle so aus den Korrelatoren erhaltenen Binärsignale können logisch ODER-verknüpft werden, um das Gesamt-"Code Match"-Signal zu erhalten. Hierbei kommt es natürlich drauf an, wie die Nullen und Einsen liegen. Im Allgemeinen ist das ja nicht bekannt, daher max. 3 Bitfehler, mit konkreten Bitfolgen dann oft auch weniger Bitfehler. Im bestimmten Fällen können sogar 0 Bitfehler auftreten. Weitere Bitfehler durch gestörte Übertragung müssen die Korrelatoren dann verarbeiten. Weitere Stauchungen treten nicht auf. Insgesamt wird beim "günstigsten" Korrelator eine max. Anzahl von F : 2 Bitfehlern durch die Stauchung gemacht.

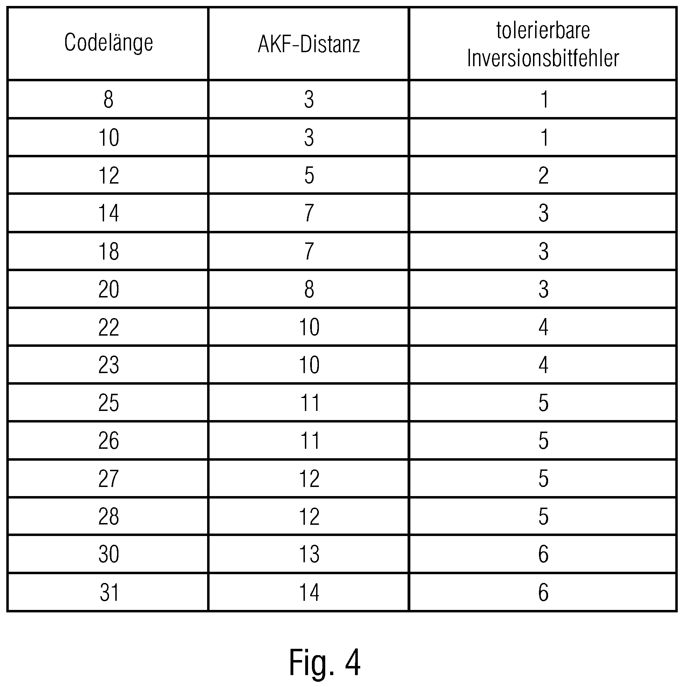

Die in Fig. 4 gezeigte Tabelle zeigt am Beispiel von binären Bitfolgen zur OOK-Modulation eines HF-Trägersignals, wie viele Bitfehler im schlimmsten Fall bei Binär-Korrelation zulässig sind, wenn entsprechend der Sequenzlänge N die beste Korrelationsfolge ausgewählt wird. Diese wurde jeweils durch Code-Suche ermittelt. Qualitätsmaß dabei war der maximale Abstand zwischen KKF-Haupt- und Nebenmaximum, auch bei beliebig verteilten F Bitfehlern. Damit wird die Eigenschaft einer Pseudozufallsfolge angestrebt (Idealfall: AKF bzw. KKF ist der Dirac-Impuls).

Bei Ausführungsbeispielen kann der Datenempfänger 100 konfiguriert sein, um die Grundfolge von N Referenzbits an der p-ten Stelle zu punktieren, um die k-te Folge der K unterschiedlichen Folgen von N-1 Referenzbits zu erhalten:

$$p = (F/2 + 1) + (k - 1) \cdot F$$

wobei k eine Laufvariable von 1 bis K ist.

Bei Ausführungsbeispielen kann die Abtastrate $DR_{RX}$ kleiner sein als eine Datenrate $DR_{TX}$ des Signals 102, z.B. um 2/N, wie z.B. 3% bis 5%.

Bei Ausführungsbeispielen kann das Signal 102 OOK (OOK = OOK = on-fff keying, dt. eine binäre Modulationsart) moduliert sein.

Im Folgenden werden detaillierte Ausführungsbeispiele der vorliegenden Erfindung beschrieben.

Hierzu wird zunächst der Effekt der unterschiedlichen Datenraten erläutert.

Wie bereits oben erwähnt kommt bei Ausführungsbeispielen ein Abtastverfahren ohne Überabtastung zum Einsatz. Bei Ausführungsbeispielen wird zwischen der Sende-Datenrate $DR_{TX}$ und der Empfänger-Datenrate $DR_{RX}$ unterschieden, wobei die Sende-Datenrate $DR_{TX}$ und die Empfänger-Datenrate $DR_{RX}$ unterschiedlich gewählt sind.

Bei Ausführungsbeispielen soll eine bestimmte Bitfolge der Länge L (z.B. 31 Bits) übertragen werden. Dazu werden nachfolgend vier Fälle untersucht.

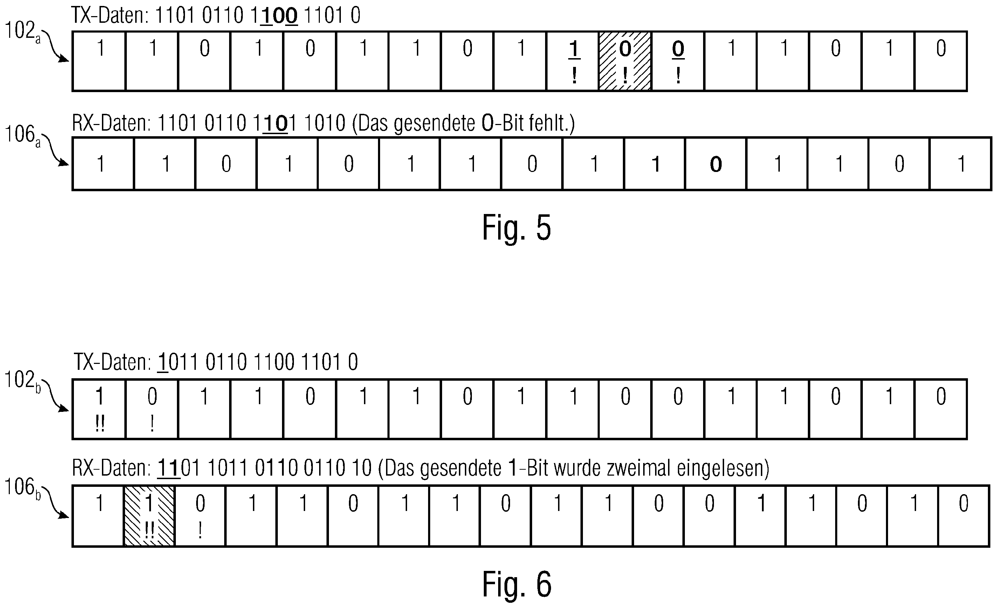

Gem. einem ersten Fall ist die Sende-Datenrate $DR_{TX}$ größer als die Empfänger-Datenrate $DR_{RX}$, d.h. $DR_{TX} > DR_{RX}$, wodurch es zu einer Stauchung des Bitstroms kommt, wie dies in Fig. 5 gezeigt ist. Im Detail zeigt Fig. 5 eine schematische Ansicht einer gesendeten Folge 102a von Bits mit einer Sende-Datenrate $DR_{TX}$ und einer empfangenen Folge 106a von Bits, die durch Abtasten der gesendeten Folge 102a von Bits mit der Abtastrate (Empfänger-Datenrate) $DR_{RX}$, die kleiner ist als die Sende-Datenrate $DR_{TX}$, resultiert. Wie in Fig. 5 zu erkennen ist, fehlt in der empfangenen Folge 106a von Bits ein gesendetes 0-Bit. Wenn die Sende-Datenrate $DR_{TX}$ größer als die Empfänger-Datenrate $DR_{RX}$ ist, dann kommt es also dazu, dass gesendete Bits im Bitstrom des Empfängers fehlen. Die Fehlstelle ist im Betrieb im Allgemeinen nicht vorhersehbar.

Gem. einem zweiten Fall ist die Sende-Datenrate $DR_{TX}$ kleiner als die Empfänger-Datenrate $DR_{RX}$, d.h. $DR_{TX} > DR_{RX}$, wodurch es zu einer Aufweitung des Bitstroms kommt, wie dies in Fig. 6 gezeigt ist. Im Detail zeigt Fig. 6 eine schematische Ansicht einer gesendeten Folge 102b von Bits mit einer Sende-Datenrate $DR_{TX}$ und einer empfangenen Folge 106b von Bits, die durch Abtasten der gesendeten Folge 102b von Bits mit der Abtastrate (Empfänger-Datenrate) $DR_{RX}$, die größer ist als die Sende-Datenrate $DR_{TX}$, resultiert. Wie in Fig. 6 zu erkennen ist, wurde ein gesendetes 1-Bit zweimal eingelesen. Wenn die Sende-Datenrate $DR_{TX}$ kleiner als die Empfänger-Datenrate $DR_{RX}$ ist, dann kommt es also dazu, dass gesendete Bits mehrfach im Bitstrom des Empfängers auftreten. Die Wiederholstelle ist im Betrieb im Allgemeinen nicht vorhersehbar.

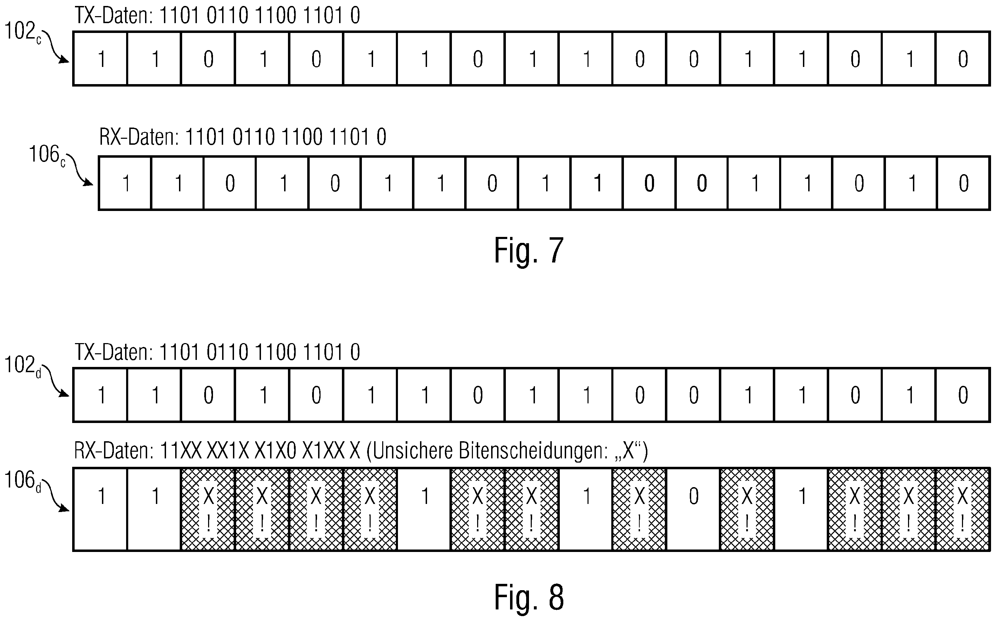

Gem. einem dritten Fall ist die Sende-Datenrate $DR_{TX}$ gleich der Empfänger-Datenrate $DR_{RX}$, d.h. $DR_{TX} = DR_{RX}$, wie dies in Fig. 7 gezeigt ist. Im Detail zeigt Fig. 7 eine schematische Ansicht einer gesendeten Folge 102c von Bits mit einer Sende-Datenrate $DR_{TX}$ und einer empfangenen Folge 106c von Bits, die durch Abtasten der gesendeten Folge 102c von Bits mit der Abtastrate (Empfänger-Datenrate) $DR_{RX}$, die gleich der Sende-Datenrate $DR_{TX}$ ist, resultiert. Wie in Fig. 7 zu erkennen ist, sind gesendete Bits korrekt im Bitstrom des Empfängers abgebildet. Es gibt keine Fehlstellen. Die Abtastzeitpunkte fallen nicht mit den Bitflanken zusammen. Das ist der gewünschte Empfangsfall.

Gem. einem vierten Fall ist die Sende-Datenrate $DR_{TX}$ gleich der Empfänger-Datenrate $DR_{RX}$, d.h.

$DR_{TX} = DR_{RX}$, wobei die Abtastzeitpunkte jedoch mit den Bitflanken zusammen fallen, wie dies in Fig. 8 gezeigt ist. Im Detail zeigt Fig. 8 eine schematische Ansicht einer gesendeten Folge 102d von Bits mit einer Sende-Datenrate $DR_{TX}$ und einer empfangenen Folge 106d von Bits, die durch Abtasten der gesendeten Folge 102d von Bits mit der Abtastrate (Empfänger-Datenrate) $DR_{RX}$, die gleich der Sende-Datenrate $DR_{TX}$ ist, resultiert, wenn die Abtastzeitpunkte mit den Bitflanken zusammen fallen. Wie in Fig. 8 zu erkennen ist, sind viele gesendete Bits sind im Bitstrom des Empfängers falsch abgebildet. Die Bitentscheidungen im Empfänger sind an den Bitflanken unsicher. Dort liegen die Fehlstellen.

Für gleiche Sende- und Empfängerdatenrate können der dritte Fall oder der vierte Fall auftreten. Insbesondere kann der vierte Fall (viele RX-Bitfehler) unvorhergesehen und längere Zeit anhalten, etwa im Laborbetrieb für Übertragungstests oder im Feld bei wenig Temperaturschwankung. Eine Funkübertragung ist dann nicht mehr möglich. Eine direkte Abtastung, d.h. "ohne Überabtastung" ist ohne weitere Maßnahmen nicht praktikabel. Hier ist die relative Phasenlage von TX- und RX-Datenstrom entscheidend.

Werden eine Stauchung bzw. Spreizung der Bitströme im Empfänger toleriert, dann sind der erste Fall und der zweite Fall denkbar. Werden statt roher Bitdaten spezielle Korrelationsfolgen (z.B. als Spreizcodes) übertragen, die bestimmte Datenbits repräsentieren, kann die Rekonstruktion auch mit Fehlstellen ohne Überabtastung gelingen.

Mit dem zweiten ($DR_{TX} < DR_{RX}$) erfolgt eine Aufweitung des Bitstromes. Gesendete Bits können zweimal statt einmal im Bitstrom des Empfängers auftreten. Wenn die Sendedatenrate niedriger als die Empfängerdatenrate gemäß

$$\frac{DR_{RX} - DR_{TX}}{DR_{RX}} \geq \frac{1}{L}$$

gewählt wird, so wird im Falle des Gleichheitszeichens die Empfangsbitfolge L+1 und die Sendebitfolge L lang sein. Das bedeutet, dass Korrelatoren im Empfänger um 1 Bit verlängert werden müssen. Weil die Einfügestelle mit der Doppelung ("Fehlstelle") a priori nicht bekannt ist, wird vorgeschlagen, L Korrelatoren mit jeweils anderen Referenzfolgen zu implementieren. Die L verschiedenen Referenzfolgen können leicht durch die L verschiedenen Fälle der Bitdoppelung erzeugt werden. In jedem Fall wird einer der Korrelatoren erfolgreich auslösen, weil die a-priori-Doppelung dort im Referenzcode abgebildet ist.

Zur effizienteren Implementierung wird gem. Ausführungsbeispielen eine geringere Anzahl von Korrelatoren angestrebt. Dies spart Chipfläche, reduziert den dynamischen und statischen Digitalstromverbrauch. Sind die Korrelationsfolgen adäquat gewählt, d.h. die Autokorrelations- bzw. Kreuzkorrelationsfunktionen weisen ein scharf ausgeprägtes Maximum mit niedrigen Nebenmaxima auf, die auch bei Übertragungsfehlern noch niedrig bleiben (Postulat der Fehlertoleranz des Codes), kann eine reduzierte Anzahl von Korrelatoren implementiert werden.

Günstiger ist der erste Fall, wenn die Sendedatenrate $DR_{TX}$ größer als die Empfangsdatenrate $DR_{RX}$ gewählt wird. Dann verkürzt sich die Länge der Korrelatoren statt sich zu verlängern, was eine geringere Anzahl von digitalen Speicherzellen bzw. kürzere Register zur Folge hat. Auch hier können gem. Ausführungsbeispielen bevorzugt, nicht alle möglichen L-1 Implementierungen von Korrelatoren vorgesehen werden, sondern nur eine Auswahl hiervon.

Für den in Fig. 5 gezeigten ersten Fall ergeben sich dann 17 mögliche Korrelationsfolgen der Länge 16 Bit:

```
_101 0110 1100 1101 0
1_01 0110 1100 1101 0
11_1 0110 1100 1101 0
110_0110 1100 1101 0
1101 _110 1100 1101 0
1101 0_10 1100 1101 0
1101 01_0 1100 1101 0
1101 011_ 1100 1101 0
1101 0110 _100 1101 0
1101 0110 1_00 1101 0
1101 0110 11_0 1101 0
1101 0110 110_ 1101 0
1101 0110 1100 _101 0
1101 0110 1100 1_01 0
1101 0110 1100 11_1 0
1101 0110 1100 110_ 0
1101 0110 1100 1101 _
```

Wird stattdessen eine Auswahl von Korrelationsfolgen unter der Annahme der Fehlertoleranz (beispielsweise 2 Bitfehler innerhalb der 17-Bit-Sequenz) benutzt, können die Punktierungen nun an der 3., der 6., der 9., der 12. und an der 15. Stelle erfolgen:

```
11_1 0110 1100 1101 0
1101 0_10 1100 1101 0
1101 0110 _100 1101 0
1101 0110 110_ 1101 0
1101 0110 1100 11_1 0
```

Findet die tatsächliche Stauchung ein oder zwei Bits vor oder nach einer Sequenzpunktierung (_) statt, können zwischen Stauchungsposition und Punktierungsstelle maximal zwei, bestenfalls kein Bitfehler gemacht werden.

Beispielsweise kann eine tatsächliche Stauchung ("\") an der dritten Stelle vorliegen:

```
110\ 0110 1100 1101 0, also:
1100 1101 1001 1010
```

Damit ergibt sich folgende Referenzfolgen folgende Fehlerzahl:

| | |
|---|---|
| 11_**1** 0110 1100 1101 0 | 1 Fehler |
| 110**1 0**_10 1100 1101 0 | 2 Fehler |
| 110**1 0**110 _100 1101 0 | 4 Fehler |
| 110**1 0**110 110_ 1101 0 | 5 Fehler |
| 110**1 0**110 110**0** 11_**1** 0 | 7 Fehler |

In diesem Fall könnten bei Fehlertoleranz "2 von 17" die beiden ersten Referenzfolgen in einem Korrelator positiv anschlagen. Dieses Beispiel zeigt, dass bereits eine Auswahl von fünf Korrelatoren statt 16 ausreichen, zur Erkennung der punktierten Empfangssequenz. Welcher der Korrelatoren auslöst, ist prinzipiell nicht entscheidend. Daher können die Korrelatorentscheidungen miteinander logisch Oder-verknüpft werden.

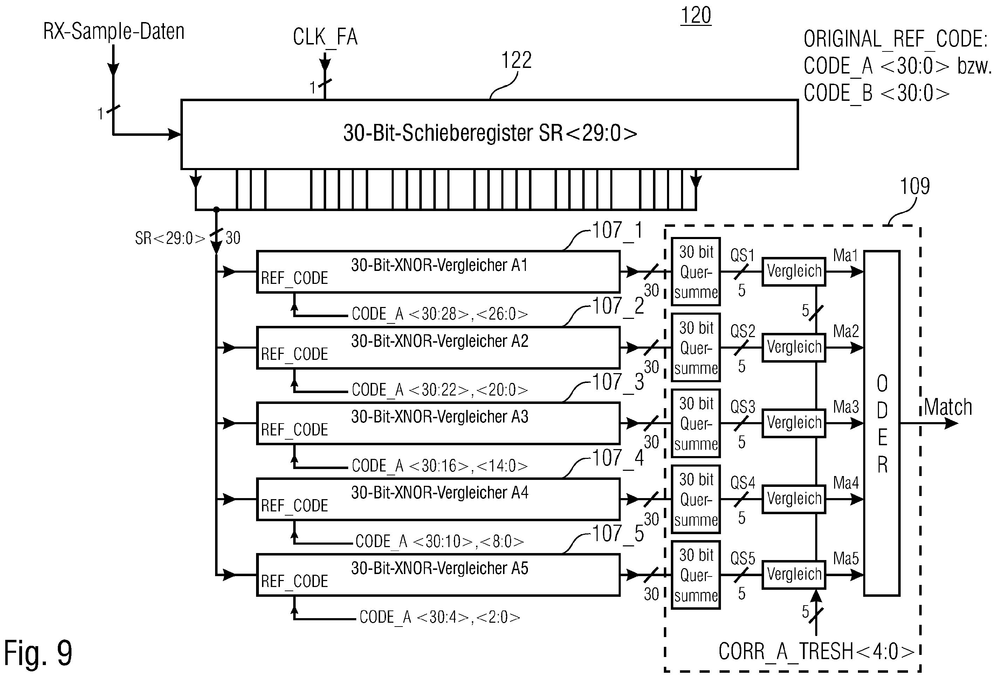

Für Implementierungen mit 31-Bit-Sequenzen und einer Fehlertoleranz von fünf beliebigen Bitfehlern wird daher vorgeschlagen, fünf Korrelatoren (der Länge 30 Bit) mit Punktierungen an folgenden Stellen zu implementieren (vgl. Fig. 9):

Stelle 3, Stelle 9, Stelle 15, Stelle 21, Stelle 27.

Als Korrelatorgesamtergebnis kann ein "Match"-Signal gebildet werden, das aus der logischen Veroderung der Matchsignale Ma1 bis Ma5 der fünf punktierten Korrelatoren hervorgeht, wie dies in Fig. 9 gezeigt ist, welche ein Beispiel für einen Satz von fünf 30-Bit-Binärkorrelatoren mit unterschiedlicher Punktierung zeigt. Im Detail zeigt Fig. 9 ein schematisches Blockschaltbild einer Korrelationsstufe 120 des Datenempfängers 100, gemäß einem Ausführungsbeispiel der vorliegenden Erfindung. Die Korrelationsstufe 120 umfasst ein 30-Bit-Schieberegister 122, K=5 Korrelatoren 107_1-107_K (K=5), die z.B. jeweils als 30-Bit-XNOR-Vergleicher implementiert sind, und einen Detektor 109, der auslöst, wenn zumindest eines der K=5 Teilkorrelationsergebnisse eine Detektionsschwelle überschreitet.

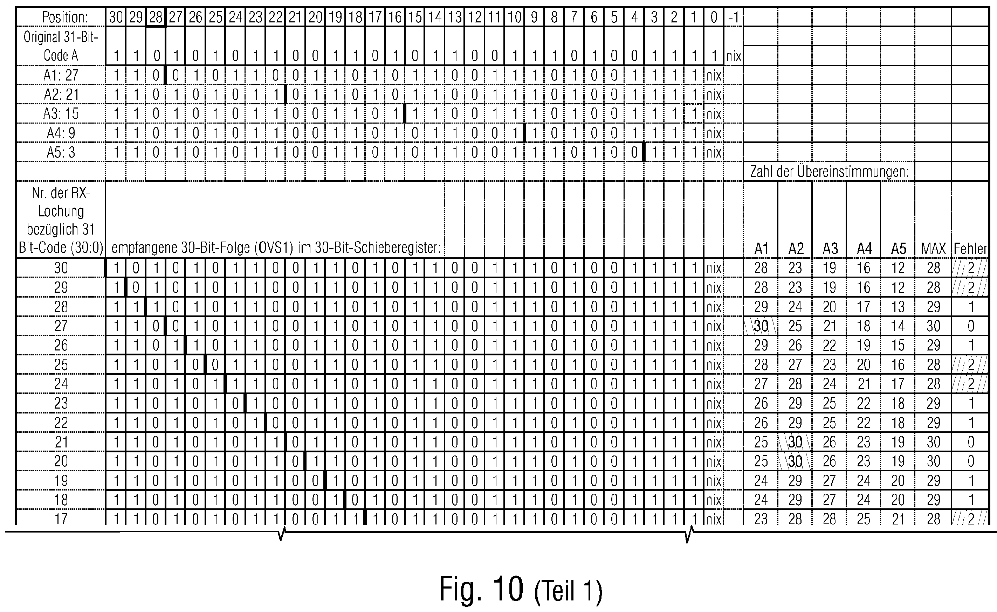

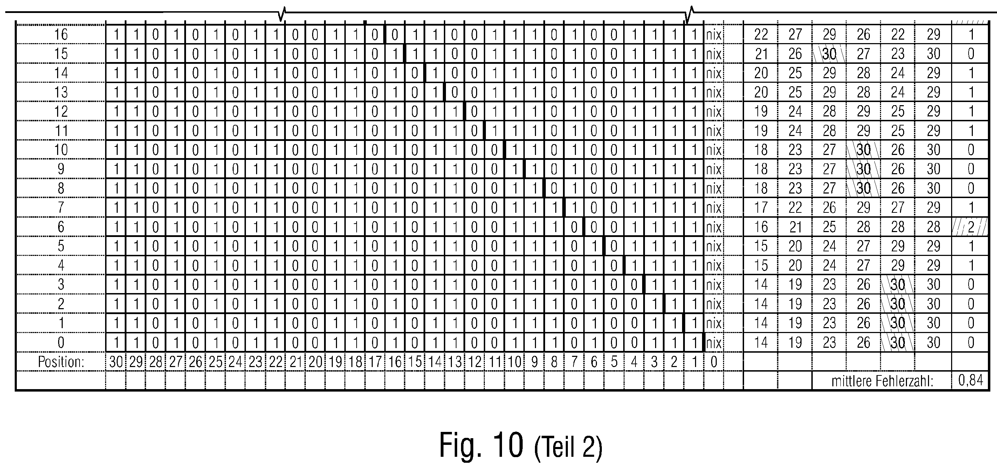

Fig. 10 zeigt in einer Tabelle eine Bitfehlerstatistik für 30 verschiedene Fälle der Stauchung des Bitstroms. Die in Fig. 10 tabellierte Fehlerstatistik erklärt die Erkennung der RX-Sequenzen mit den punktierten Korrelatoren ("A1" - "A5"). Ganz rechts ist die tatsächliche Fehlerzahl gezeigt, wenn alle 30 Fälle für die tatsächliche Stauchung des Bitstroms durchgespielt werden. Dabei ergibt sich für den Fall der Gleichverteilung eine mittlere Fehlerzahl von 0,84 Bit bei einer maximalen Fehlerzahl von 2. In elf von 30 Fällen (das sind etwa 36,7%) kommt es zu keinen Bitfehlern innerhalb der 30-Bit-Folgen. In etwa 43% der Fälle kommt es nur zu einem Bitfehler innerhalb der 30-Bit-Sequenz.

Bei der Punktierung können nach der Fig. 10 gezeigten Tabelle also bis zu zwei Bitfehler entstehen, obwohl der Empfang der Bitsequenz fehlerfrei war. Daher ist es im Betrieb erforderlich, die Korrelator-Schwelle CORR_A_THRESH um bis zu zwei abzusenken. Für generell niedrig gewählte Schwellwerte, z.B. bei 25, kann es mitunter zu Verwechslungen mit anderen Korrelationscodes kommen. Daher wirken sich die durch Punktierung entstehenden Bitfehler minimal auf die erzielbare Empfindlichkeit aus. Praktische Erfahrungen bei Labormessungen zeigen eine um ca. 1 dB niedrigere Empfindlichkeit. Das ist eine tolerierbare Einschränkung.

Das hierin gem. Ausführungsbeispielen beschriebene direkte Abtastverfahren mit punktierten Korrelatoren erlaubt den Wegfall von separaten Synchronisationsmethoden bei der Funkübertragung. Dies erspart Sendezeit, erniedrigt die Systemlatenz und erhöht die maximale Anzahl an Funkteilnehmern pro Sekunde. Darüber hinaus muss der Funkempfänger keine aufwändige, hochgenaue Lokaloszillator-Frequenz-aufbereitung mit integrierten Phasenregelkreisen (PLLs) und hochfrequenten Quarzen beinhalten. Stattdessen können kostengünstige Uhrenquarze eingesetzt werden, die außerdem als Quarzoszillator unter 1 μA Stromaufnahme aufweisen. Dies gilt für hochfrequente Oszillator-schaltungen nicht; hier muss mit mehr als 1 mA gerechnet werden. Die hierin gem. Ausführungsbeispielen beschriebene Methode erfordert keine Rückmeldung durch den Funkempfänger (kein Funkrückkanal nötig) und ermöglicht in jedem Fall den Empfang und die erfolgreiche Dekodierung von OOK-Funksequenzen. Daneben ist die hierin gem. Ausführungsbeispielen beschriebene Methode auch noch geeignet, fehlertolerante OOK-Decodierung mit Korrelation zuzulassen. Dies wäre für eine separate Synchronisationsschaltung eine zusätzliche Vorgabe, die es zu erfüllen gilt: bei der Implementierung und bei der tatsächlichen Funkübertragung. Ein Nichterkennen einer Synchronisationsnachricht würde zum Totalverlust der nachfolgenden Funknachricht führen. Auch hier ist die hierin gem. Ausführungsbeispielen beschriebene Methode klar im Vorteil.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf das das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] X. Huang, S. Rampu, X. Wang, G. Dolmans, H. de Groot: "A 2.4GHz/915MHz 51μW Wake-Up Receiver with Offset and Noise Suppression" in: 2010 IEEE International SolidState Circuits Conference Digest of Technical Papers (2010), pp. 222-223

[2] J.L. Bohorquez, A.P. Chandrakasan, and J. L. Dawson: "A 350μW CMOS MSK Transmitter and 400μW OOK Super-Regenerative Receiver for Medical Implant Communications" in: IEEE Journal of Solid-State Circuits (VLSI Symposium Special Issue), pp. 1248-1259, Apr. 2009.

[3] S. Drago, D. M. Leenaerts, F. Sebastiano, L. J. Breems, K. A. Makinwa, B. Nauta: "A 2.4GHz 830pJ/bit Duty-Cycled Wake-Up Receiver with -82dBm Sensitivity for CrystalLess Wireless Sensor Nodes" in: 2010 IEEE International SolidState Circuits Conference Digest of Technical Papers (2010), pp. 224-225

[4] US 2008/108318 A1

[5] R. Piyare, A. L. Murphy, C. Kiraly, P. Tosato and D. Brunelli, "Ultra Low Power Wake-Up Radios: A Hardware and Networking Survey," in IEEE Communications Surveys & Tutorials, vol. 19, no. 4, pp. 2117-2157, Fourthquarter 2017.

[6] E. Alpman et al., "95μW 802.11g/n compliant fully-integrated wake-up receiver with -72dBm sensitivity in 14 nm FinFET CMOS," 2017 IEEE Radio Frequency Integrated Circuits Symposium (RFIC), Honolulu, HI, 2017, pp. 172-175.

[7] E. T. Armas, D. Ramos-Valido, S. L. Khemchandani and J. del Pino, "A 40.9 μW high sensitivity wake-up radio for wireless sensor networks using uncertain-IF architecture," 2015 Conference on Design of Circuits and Integrated Systems (DCIS), Estoril, 2015, pp. 1-6.

[8] WO 2013/131963 A1

[9] EP 2591557 B1

[10] US 2007/211835 A1

**Patentansprüche**

1. Datenempfänger,

   wobei der Datenempfänger konfiguriert ist, um ein Signal, das eine Folge von N Bits aufweist, zu empfangen, um ein Empfangssignal zu erhalten, wobei N eine natürliche Zahl größer gleich acht ist, N ≥ 8,
   wobei der Datenempfänger konfiguriert ist, um das Empfangssignal mit einer Abtastrate, die mit einer Abweichung von bis zu 2/N einem Abtastwert pro Bit der Folge von N Bits entspricht, abzutasten, um eine Folge von empfangenen Bits zu erhalten,
   wobei der Datenempfänger konfiguriert ist, um die Folge von empfangenen Bits mit K unterschiedlichen Folgen von N-1 Referenzbits zu korrelieren, um K Teilkorrelationsergebnisse zu erhalten, wobei K kleiner gleich N-1 und größer gleich drei ist, N-1 ≥ K ≥ 3,
   wobei die K unterschiedlichen Folgen von Referenzbits unterschiedlich punktierte Versionen der gleichen Grundfolge von N Referenzbits sind,
   wobei der Datenempfänger konfiguriert ist, die Folge von N Bits zu detektieren wenn zumindest eines der K Teilkorrelationsergebnisse eine Detektionsschwelle überschreitet.

2. Datenempfänger nach dem vorangehenden Anspruch,

   wobei die Anzahl K an unterschiedlichen Folgen von N-1 Referenzbits wie folgt von einer Anzahl F an tolerierbaren Fehlern abhängig ist:

   $$K = \lceil N/F \rceil$$

   wobei F eine natürliche Zahl größer gleich eins und kleiner gleich N/3 ist, N/3 ≥ F ≥ 1.

3. Datenempfänger nach dem vorangehenden Anspruch,

   wobei der Datenempfänger konfiguriert ist, um die Grundfolge von N Referenzbits an der p-ten Stelle zu punktieren, um die k-te Folge der K unterschiedlichen Folgen von N-1 Referenzbits zu erhalten:

   $$p = (F/2 + 1) + (k - 1) \cdot F$$

   wobei k eine Laufvariable von 1 bis K ist.

**4.** Datenempfänger nach einem der vorangehenden Ansprüche,
wobei die Folge von empfangenen Bits eine Länge von N-1 Bits hat.

**5.** Datenempfänger nach einem der vorangehenden Ansprüche,
wobei die Abtastrate kleiner ist als eine Datenrate des Signals.

**6.** Datenempfänger nach einem der vorangehenden Ansprüche,
wobei das Signal On-Off Keying, OOK, moduliert ist.

**7.** Datenempfänger nach einem der vorangehenden Ansprüche,
wobei N=31 und K=5 ist.

**8.** Datenempfänger nach Anspruch 1, wobei das Signal OOK moduliert ist, wobei N=31 und K=5 ist.

**9.** Verfahren zum Detektieren einer Folge von N Bits eines Empfangssignals, wobei das Verfahren aufweist:

Empfangen eines Signals, das eine Folge von N Bits aufweist, um ein Empfangssignal zu erhalten, wobei N eine natürliche Zahl größer gleich acht ist, $N \geq 8$,
Abtasten des Empfangssignals mit einer Abtastrate, die mit einer Abweichung von bis zu 2/N einem Abtastwert pro Bit der Folge von N Bits entspricht, um eine Folge von empfangenen Bits zu erhalten,
Korrelieren der Folge von empfangenen Bits mit K unterschiedlichen Folgen von N-1 Referenzbits, um K Teilkorrelationsergebnisse zu erhalten, wobei K kleiner gleich N-1 und größer gleich drei ist, $N-1 \geq K \geq 3$,
wobei die K unterschiedlichen Folgen von Referenzbits unterschiedlich punktierte Versionen der gleichen Grundfolge von N Referenzbits sind,
Detektieren der Folge von N Bits, wenn zumindest eines der K Teilkorrelationsergebnisse eine Detektionsschwelle überschreitet.

**10.** Computerprogramm zur Durchführung des Verfahrens nach Anspruch 9.

**Claims**

**1.** Data receiver,

wherein the data receiver is configured to receive a signal comprising a sequence of N bits so as to obtain a reception signal, wherein N is a natural number greater than or equal to eight, $N \geq 8$,
wherein the data receiver is configured to sample the reception signal with a sampling rate that corresponds, with a deviation of up to 2/N, to one sample value per bit of the sequence of N bits so as to obtain a sequence of received bits,
wherein the data receiver is configured to correlate the sequence of received bits with K different sequences of N-1 reference bits so as to obtain K partial correlation results, wherein K is smaller than or equal to N-1 and greater than or equal to three, $N-1 \geq K \geq 3$,
wherein the K different sequences of reference bits are differently punctured versions of the same base sequence of N reference bits,
wherein the data receiver is configured to detect the sequence of N bits when at least one of the K partial correlation results exceeds a detection threshold.

**2.** Data receiver according to the preceding claim,

wherein the number K of different sequences of N-1 reference bits depends on a number F of tolerable errors as follows:

$$K = \lceil N/F \rceil$$

wherein F is a natural number greater than or equal to one and smaller than or equal to N/3, $N/3 \geq F \geq 1$.

**3.** Data receiver according to the preceding claim,

wherein the data receiver is configured to puncture the base sequence of N reference bits at the p-th position so as to obtain the k-th sequence of the K different sequences of N-1 reference bits:

$$p = (F/2 + 1) + (k - 1) \cdot F$$

wherein k is a control variable of 1 to K.

**4.** Data receiver according to any one of the preceding claims,
wherein the sequence of received bits has a length of N-1 bits.

**5.** Data receiver according to any one of the preceding claims,
wherein the sampling rate is smaller than a data rate of the signal.

**6.** Data receiver according to any one of the preceding claims,
wherein the signal is On-Off-Keying, OOK-modulated.

7. Data receiver according to any one of the preceding claims,
wherein N=31 and K=5.

8. Data receiver according to claim 1, wherein the signal is OOK-modulated, wherein N=31 and K=5.

9. Method for detecting a sequence of N bits of a reception signal, wherein the method comprises:

receiving a signal comprising a sequence of N bits so as to obtain a reception signal, wherein N is a natural number greater than or equal to eight, N ≥ 8,

sampling the reception signal with a sampling rate that corresponds, with a deviation of up to 2/N, to one sample value per bit of the sequence of N bits so as to obtain a sequence of received bits,

correlating the sequence of received bits with K different sequences of N-1 reference bits so as to obtain K partial correlation results, wherein K is smaller than or equal to N-1 and greater than or equal to three, N-1 ≥ K ≥ 3,

wherein the K different sequences of reference bits are differently punctured versions of the same base sequence of N reference bits,

detecting the sequence of N bits when at least one of the K partial correlation results exceeds a detection threshold.

10. Computer program for performing the method according to claim 9.

**Revendications**

1. Récepteur de données,

le récepteur de données étant configuré pour recevoir un signal comprenant une séquence de N bits, de manière à obtenir un signal de réception, N étant un nombre naturel supérieur ou égal à huit, N ≥ 8,

le récepteur de données étant configuré pour échantillonner le signal de réception à une fréquence d'échantillonnage qui, avec un écart pouvant aller jusqu'à 2/N, correspond à un échantillon par bit de la séquence de N bits, de manière à obtenir une séquence de bits reçus,

le récepteur de données étant configuré pour corréler la séquence de bits reçus avec K différentes séquences de N-1 bits de référence, de manière à obtenir K résultats de corrélation partielle, K étant inférieur ou égal à N-1 et supérieur ou égal à trois, N-1 ≥ K ≥ 3,

les K différentes séquences de bits de référence étant des versions poncturées différemment de la même séquence de base de N bits de référence,

le récepteur de données étant configuré pour détecter la séquence de N bits lorsqu'au moins l'un des K résultats de corrélation partielle dépasse un seuil de détection.

2. Récepteur de données selon la revendication précédente,

dans lequel le nombre K de séquences différentes de N-1 bits de référence dépend comme suit d'un nombre F d'erreurs tolérables :

$$K = [N/F]$$

F étant un nombre naturel supérieur ou égal à un et inférieur ou égal à N/3, N/3 ≥ F ≥ 1.

3. Récepteur de données selon la revendication précédente,

le récepteur de données étant configuré pour poncturer la séquence de base de N bits de référence à la position p, de manière à obtenir la k-ième séquence des K différentes séquences de N-1 bits de référence :

$$p = (F/2 + 1) + (k - 1) \cdot F$$

k étant un indice allant de 1 à K.

4. Récepteur de données selon l'une quelconque des revendications précédentes, dans lequel la séquence de bits reçus a une longueur de N-1 bits.

5. Récepteur de données selon l'une quelconque des revendications précédentes, dans lequel la fréquence d'échantillonnage est inférieure à un débit de données du signal.

6. Récepteur de données selon l'une quelconque des revendications précédentes, dans lequel le signal est modulé en On-Off Keying ; OOK.

7. Récepteur de données selon l'une quelconque des revendications précédentes, dans lequel N = 31 et K = 5.

8. Récepteur de données selon la revendication 1, dans lequel le signal est modulé en OOK, et dans lequel N = 31 et K = 5.

9. Procédé de détection d'une séquence de N bits d'un signal de réception, le procédé comprenant :

réception d'un signal comprenant une séquence de N bits, de manière à obtenir un signal de réception, N étant un nombre naturel supérieur ou égal à huit, $N \geq 8$,

échantillonnage du signal de réception à une fréquence d'échantillonnage qui, avec un écart pouvant aller jusqu'à $2/N$, correspond à un échantillon par bit de la séquence de N bits, de manière à obtenir une séquence de bits reçus,

corrélation de la séquence de bits reçus avec K différentes séquences de N-1 bits de référence, de manière à obtenir K résultats de corrélation partielle, K étant inférieur ou égal à N-1 et supérieur ou égal à trois, $N-1 \geq K \geq 3$, les K différentes séquences de bits de référence étant des versions poncturées différemment de la même séquence de base de N bits de référence, et détection de la séquence de N bits lorsqu'au moins l'un des K résultats de corrélation partielle dépasse un seuil de détection.

10. Programme d'ordinateur pour la mise en œuvre du procédé selon la revendication 9.

Fig. 1

EP 4 068 674 B1

Fig. 2

Fig. 3

| Codelänge | AKF-Distanz | tolerierbare Inversionsbitfehler |
|---|---|---|
| 8 | 3 | 1 |
| 10 | 3 | 1 |
| 12 | 5 | 2 |
| 14 | 7 | 3 |
| 18 | 7 | 3 |
| 20 | 8 | 3 |
| 22 | 10 | 4 |
| 23 | 10 | 4 |
| 25 | 11 | 5 |
| 26 | 11 | 5 |
| 27 | 12 | 5 |
| 28 | 12 | 5 |
| 30 | 13 | 6 |
| 31 | 14 | 6 |

# Fig. 4

TX-Daten: 1101 0110 1**100** 1101 0

| | | | | | | | | | | | | | | | | |
|---|---|---|---|---|---|---|---|---|---|---|---|---|---|---|---|---|
| 1 | 1 | 0 | 1 | 0 | 1 | 1 | 0 | 1 | 1<br>! | 0<br>! | 0<br>! | 1 | 1 | 0 | 1 | 0 |

$102_a$

RX-Daten: 1101 0110 1**10**1 1010 (Das gesendete 0-Bit fehlt.)

| | | | | | | | | | | | | | | | |
|---|---|---|---|---|---|---|---|---|---|---|---|---|---|---|---|
| 1 | 1 | 0 | 1 | 0 | 1 | 1 | 0 | 1 | **1** | **0** | 1 | 1 | 0 | 1 |

$106_a$

## Fig. 5

EP 4 068 674 B1

TX-Daten: **1**011 0110 1100 1101 0

| | | | | | | | | | | | | | | | | |
|---|---|---|---|---|---|---|---|---|---|---|---|---|---|---|---|---|
| 1<br>!! | 0<br>! | 1 | 1 | 0 | 1 | 1 | 0 | 1 | 1 | 0 | 0 | 1 | 1 | 0 | 1 | 0 |

$102_b$

RX-Daten: **11**01 1011 0110 0110 10 (Das gesendete 1-Bit wurde zweimal eingelesen)

| | | | | | | | | | | | | | | | | | |
|---|---|---|---|---|---|---|---|---|---|---|---|---|---|---|---|---|---|
| 1 | 1<br>!! | 0<br>! | 1 | 1 | 0 | 1 | 1 | 0 | 1 | 1 | 0 | 0 | 1 | 1 | 0 | 1 | 0 |

$106_b$

## Fig. 6

TX-Daten: 1101 0110 1100 1101 0

102_c →

| 1 | 1 | 0 | 1 | 0 | 1 | 1 | 0 | 1 | 1 | 0 | 0 | 1 | 1 | 0 | 1 | 0 |

RX-Daten: 1101 0110 1100 1101 0

106_c →

| 1 | 1 | 0 | 1 | 0 | 1 | 1 | 0 | 1 | 1 | 0 | 0 | 1 | 1 | 0 | 1 | 0 |

Fig. 7

TX-Daten: 1101 0110 1100 1101 0

102_d →

| 1 | 1 | 0 | 1 | 0 | 1 | 1 | 0 | 1 | 1 | 0 | 0 | 1 | 1 | 0 | 1 | 0 |

RX-Daten: 11XX XX1X X1X0 X1XX X (Unsichere Bitenscheidungen: „X")

106_d →

| 1 | 1 | X! | X! | X! | X! | 1 | X! | X! | 1 | X! | 0 | X! | 1 | X! | X! | X! |

Fig. 8

Fig. 9

EP 4 068 674 B1

| Position: | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | -1 | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| Original 31-Bit-Code A | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | nix | | | | | | | |
| A1: 27 | 1 | 1 | 0 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | 1 | nix | | | | | | | |
| A2: 21 | 1 | 1 | 0 | 1 | 0 | 1 | 0 | 1 | 1 | 0 | 1 | 1 | 0 | 1 | 0 | 1 | 1 | 0 | 0 | 1 | 1 | 1 | 0 | 1 | 0 | 0 | 1 | 1 | 1 | 1 | 1 | nix | | | | | | | |
| A3: 15 | 1 | 1 | 0 | 1 | 0 | 1 | 0 | 1 | 1 | 0 | 0 | 1 | 1 | 0 | 1 | 1 | 1 | 0 | 0 | 1 | 1 | 1 | 0 | 1 | 0 | 0 | 1 | 1 | 1 | 1 | 1 | nix | | | | | | | |
| A4: 9 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 0 | 1 | 0 | 0 | 1 | 1 | 1 | 1 | 1 | nix | | | | | | | |
| A5: 3 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | nix | | | | | | | |
| | | | | | | | | | | | | | | | | | | | | | | | | | | | | | | | | | | Zahl der Übereinstimmungen: | | | | | |
| Nr. der RX-Lochung bezüglich 31 Bit-Code (30:0) | empfangene 30-Bit-Folge (OVS1) im 30-Bit-Schieberegister: | | | | | | | | | | | | | | | | | | | | | | | | | | | | | | | | A1 | A2 | A3 | A4 | A5 | MAX | Fehler |
| 30 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 28 | 23 | 19 | 16 | 12 | 28 | 2 |
| 29 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 28 | 23 | 19 | 16 | 12 | 28 | 2 |
| 28 | 1 | 1 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 29 | 24 | 20 | 17 | 13 | 29 | 1 |
| 27 | 1 | 1 | 0 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 30 | 25 | 21 | 18 | 14 | 30 | 0 |
| 26 | 1 | 1 | 0 | 1 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 29 | 26 | 22 | 19 | 15 | 29 | 1 |
| 25 | 1 | 1 | 0 | 1 | 0 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 28 | 27 | 23 | 20 | 16 | 28 | 2 |
| 24 | 1 | 1 | 0 | 1 | 0 | 1 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 27 | 28 | 24 | 21 | 17 | 28 | 2 |
| 23 | 1 | 1 | 0 | 1 | 0 | 1 | 0 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 26 | 29 | 25 | 22 | 18 | 29 | 1 |
| 22 | 1 | 1 | 0 | 1 | 0 | 1 | 0 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 26 | 29 | 25 | 22 | 18 | 29 | 1 |
| 21 | 1 | 1 | 0 | 1 | 0 | 1 | 0 | 1 | 1 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 25 | 30 | 26 | 23 | 19 | 30 | 0 |
| 20 | 1 | 1 | 0 | 1 | 0 | 1 | 0 | 1 | 1 | 0 | 1 | 1 | 0 | 1 | 0 | 1 | 1 | 0 | 0 | 1 | 1 | 1 | 0 | 1 | 0 | 0 | 1 | 1 | 1 | 1 | | nix | 25 | 30 | 26 | 23 | 19 | 30 | 0 |
| 19 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | | nix | 24 | 29 | 27 | 24 | 20 | 29 | 1 |
| 18 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | | nix | 24 | 29 | 27 | 24 | 20 | 29 | 1 |
| 17 | 1 | 1 | 0 | 1 | 0 | 1 | 0 | 1 | 1 | 0 | 0 | 1 | 1 | 1 | 0 | 1 | 1 | 0 | 0 | 1 | 1 | 1 | 0 | 1 | 0 | 0 | 1 | 1 | 1 | 1 | | nix | 23 | 28 | 28 | 25 | 21 | 28 | 2 |

Fig. 10 (Teil 1)

EP 4 068 674 B1

| | Position | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|
| 16 | 1 | 1 | 0 | 1 | 0 | 1 | 0 | 1 | 1 | 0 | 0 | 1 | 1 | 0 | 0 | 1 | 1 | 0 | 0 | 1 | 1 | 1 | 0 | 1 | 0 | 0 | 1 | 1 | 1 | 1 | nix | 22 | 27 | 29 | 26 | 22 | 29 | 1 |
| 15 | 1 | 1 | 0 | 1 | 0 | 1 | 0 | 1 | 1 | 0 | 0 | 1 | 1 | 0 | 1 | 1 | 1 | 0 | 0 | 1 | 1 | 1 | 0 | 1 | 0 | 0 | 1 | 1 | 1 | 1 | nix | 21 | 26 | 30 | 27 | 23 | 30 | 0 |
| 14 | 1 | 1 | 0 | 1 | 0 | 1 | 0 | 1 | 1 | 0 | 0 | 1 | 1 | 0 | 1 | 0 | 1 | 0 | 0 | 1 | 1 | 1 | 0 | 1 | 0 | 0 | 1 | 1 | 1 | 1 | nix | 20 | 25 | 29 | 28 | 24 | 29 | 1 |
| 13 | 1 | 1 | 0 | 1 | 0 | 1 | 0 | 1 | 1 | 0 | 0 | 1 | 1 | 0 | 1 | 0 | 0 | 1 | 1 | 1 | 0 | 1 | 0 | 0 | 1 | 1 | 1 | 1 | nix | 20 | 25 | 29 | 28 | 24 | 29 | 1 | | |
| 12 | 1 | 1 | 0 | 1 | 0 | 1 | 0 | 1 | 1 | 0 | 0 | 1 | 1 | 0 | 1 | 0 | 1 | 1 | 0 | 1 | 1 | 1 | 0 | 1 | 0 | 0 | 1 | 1 | 1 | 1 | nix | 19 | 24 | 28 | 29 | 25 | 29 | 1 |
| 11 | 1 | 1 | 0 | 1 | 0 | 1 | 0 | 1 | 1 | 0 | 0 | 1 | 1 | 0 | 1 | 0 | 1 | 1 | 0 | 1 | 1 | 1 | 0 | 1 | 0 | 0 | 1 | 1 | 1 | 1 | nix | 19 | 24 | 28 | 29 | 25 | 29 | 1 |
| 10 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 0 | 1 | 0 | 0 | 1 | 1 | 1 | 1 | nix | 18 | 23 | 27 | 30 | 26 | 30 | 0 |
| 9 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 0 | 1 | 0 | 0 | 1 | 1 | 1 | 1 | nix | 18 | 23 | 27 | 30 | 26 | 30 | 0 |
| 8 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 0 | 1 | 0 | 0 | 1 | 1 | 1 | 1 | nix | 18 | 23 | 27 | 30 | 26 | 30 | 0 |
| 7 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 0 | 1 | 1 | 1 | 1 | nix | 17 | 22 | 26 | 29 | 27 | 29 | 1 | |
| 6 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 0 | 0 | 1 | 1 | 1 | 1 | nix | 16 | 21 | 25 | 28 | 28 | 28 | 2 |
| 5 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 1 | 1 | 1 | 1 | nix | 15 | 20 | 24 | 27 | 29 | 29 | 1 |
| 4 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 1 | 1 | 1 | 1 | nix | 15 | 20 | 24 | 27 | 29 | 29 | 1 |
| 3 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | nix | 14 | 19 | 23 | 26 | 30 | 30 | 0 |
| 2 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | nix | 14 | 19 | 23 | 26 | 30 | 30 | 0 |
| 1 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | nix | 14 | 19 | 23 | 26 | 30 | 30 | 0 |
| 0 | 1 | 1 | 0 | 1 | 0 | 1 | 0 | 1 | 1 | 0 | 0 | 1 | 1 | 0 | 1 | 0 | 1 | 1 | 0 | 0 | 1 | 1 | 1 | 0 | 1 | 0 | 0 | 1 | 1 | 1 | nix | 14 | 19 | 23 | 26 | 30 | 30 | 0 |
| Position: | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | | | | | | | |
| | | | | | | | | | | | | | | | | | | | | | | | | | | | | | | | | | | | | mittlere Fehlerzahl: | 0,84 | |

Fig. 10 (Teil 2)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007211835 A1
- US 2008108318 A1
- WO 2013131963 A1
- EP 2591557 B1

**In der Beschreibung aufgeführte Nicht-Patentliteratur**

- **X. HUANG ; S. RAMPU ; X. WANG ; G. DOLMANS ; H. DE GROOT**. A 2.4GHz/915MHz 51µW Wake-Up Receiver with Offset and Noise Suppression. *2010 IEEE International SolidState Circuits Conference Digest of Technical Papers*, 2010, 222-223
- **J.L. BOHORQUEZ ; A.P. CHANDRAKASAN ; J. L. DAWSON**. A 350µW CMOS MSK Transmitter and 400µW OOK Super-Regenerative Receiver for Medical Implant Communications. *IEEE Journal of Solid-State Circuits (VLSI Symposium Special Issue)*, April 2009, 1248-1259
- **S. DRAGO ; D. M. LEENAERTS ; F. SEBASTIANO ; L. J. BREEMS ; K. A. MAKINWA ; B. NAUTA**. A 2.4GHz 830pJ/bit Duty-Cycled Wake-Up Receiver with -82dBm Sensitivity for CrystalLess Wireless Sensor Nodes. *2010 IEEE International SolidState Circuits Conference Digest of Technical Papers*, 2010, 224-225
- **R. PIYARE ; A. L. MURPHY ; C. KIRALY ; P. TOSATO ; D. BRUNELLI**. Ultra Low Power Wake-Up Radios: A Hardware and Networking Survey. *IEEE Communications Surveys & Tutorials*, 2017, vol. 19 (4), 2117-2157
- **E. ALPMAN et al.** 95µW 802.11g/n compliant fully-integrated wake-up receiver with -72dBm sensitivity in 14 nm FinFET CMOS. *2017 IEEE Radio Frequency Integrated Circuits Symposium (RFIC), Honolulu*, 2017, 172-175
- **E. T. ARMAS ; D. RAMOS-VALIDO ; S. L. KHEMCHANDANI ; J. DEL PINO**. A 40.9 µW high sensitivity wake-up radio for wireless sensor networks using uncertain-IF architecture. *2015 Conference on Design of Circuits and Integrated Systems (DCIS)*, 2015, 1-6